(19) Europäisches Patentamt
European Patent Office
Office européen des brevets

(11) **EP 3 345 015 B1**

(12) **FASCICULE DE BREVET EUROPEEN**

(45) Date de publication et mention
de la délivrance du brevet:
**15.12.2021 Bulletin 2021/50**

(51) Int Cl.:
*G01S 13/82* *(2006.01)*     *G01S 13/84* *(2006.01)*
*G07C 9/00* *(2020.01)*

(21) Numéro de dépôt: **16759762.4**

(22) Date de dépôt: **31.08.2016**

(86) Numéro de dépôt international:
**PCT/EP2016/070545**

(87) Numéro de publication internationale:
**WO 2017/037132 (09.03.2017 Gazette 2017/10)**

(54) **PROCÉDÉ DE DÉTERMINATION D'UNE DISTANCE ENTRE UN VÉHICULE ET UN IDENTIFIANT D'ACCÈS ET DE DÉMARRAGE DU VÉHICULE**

VERFAHREN ZUR BESTIMMUNG EINES ABSTANDS ZWISCHEN EINEM FAHRZEUG UND EINEM FAHRZEUGZUGANG UND ANLASSERIDENTIFIKATOR

METHOD FOR DETERMINING A DISTANCE BETWEEN A VEHICLE AND A VEHICLE ACCESS AND STARTER IDENTIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2015 FR 1558085**

(43) Date de publication de la demande:
**11.07.2018 Bulletin 2018/28**

(73) Titulaire: **Valeo Comfort and Driving Assistance
94046 Créteil Cedex (FR)**

(72) Inventeur: **LECONTE, Eric
94046 Créteil Cedex (FR)**

(74) Mandataire: **Delplanque, Arnaud
Valeo Comfort and Driving Assistance
6 rue Daniel Costantini
94000 Créteil (FR)**

(56) Documents cités:
FR-A1- 2 981 026     US-A- 4 804 961
US-A1- 2002 094 786     US-A1- 2003 090 365
US-A1- 2006 107 307     US-A1- 2011 090 062

**Description**

**DOMAINE TECHNIQUE DE L'INVENTION**

Le domaine technique de l'invention est, d'une façon générale, les systèmes d'accès et de démarrage mains libres de véhicules. L'invention concerne plus particulièrement un procédé de détermination d'une distance séparant un véhicule d'un identifiant mains libres permettant d'accéder au véhicule et/ou de démarrer le véhicule.

**ETAT DE LA TECHNIQUE**

Les systèmes d'accès et de démarrage dit « mains libres » ou « hands free », permettant le verrouillage et le déverrouillage des portes d'un véhicule, ainsi que le démarrage de son moteur sans l'utilisation d'une clef traditionnelle, sont aujourd'hui largement répandus sur le marché.

De manière classique, lorsqu'un utilisateur souhaitant déverrouiller une porte d'un véhicule touche un capteur capacitif ou est détecté par un capteur infrarouge situé au niveau de la poignée de porte, un calculateur central du véhicule déclenche l'émission d'un signal d'interrogation basse fréquence (entre 20 et 150kHz) par une antenne basse fréquence du véhicule. Alternativement, l'antenne basse fréquence peut envoyer périodiquement de tels signaux d'interrogation basse fréquence (on parle de « polling »). Si un identifiant (qui prend classiquement et la forme d'une clef ou d'une carte électronique, voire d'un smartphone disposant d'une application adéquate activée), à proximité du véhicule, capte un signal d'interrogation, il répond en envoyant un code de déverrouillage au calculateur central par signal radio. Un récepteur radio du véhicule réceptionne alors le signal radio : si le code de verrouillage est reconnu par le calculateur central, alors ce dernier commande le déverrouillage de la porte.

Le procédé est sensiblement le même lorsque l'utilisateur souhaite démarrer le véhicule et appuie sur un interrupteur situé dans l'habitacle : dans ce cas, le moteur n'est démarré par le calculateur central que si un code de démarrage envoyé par l'identifiant est reconnu par le calculateur central.

Pour renforcer la sécurité des systèmes d'accès et de démarrage mains libres, il est souhaitable que des conditions additionnelles soient remplies avant de déclencher un verrouillage, un déverrouillage ou un démarrage. Il est notamment souhaitable que la localisation de l'identifiant soit en cohérence avec l'action à effectuer, par exemple :

- Pour un déverrouillage, l'identifiant doit être localisé dans un périmètre maximal, par exemple de 2 mètres, autour du véhicule
- Pour un verrouillage, aucun identifiant ne doit être localisé à l'intérieur de l'habitacle
- Pour un démarrage, l'identifiant doit être localisé à l'intérieur de l'habitacle.

Ainsi, une mesure de distance fiable entre l'identifiant et le véhicule est nécessaire.

Généralement, la distance est calculée à partir d'une mesure de puissance (mesure appelée RSSI pour « Received Signal Strength Indication », en terminologie anglo-saxonne) d'un signal basse fréquence reçu par l'identifiant, par exemple le signal d'interrogation. Utiliser un signal basse fréquence pour mesurer la distance est avantageux. En effet, la distance véhicule-identifiant d'un identifiant à proximité du véhicule est très largement inférieure à la longueur d'onde du signal basse fréquence. Ainsi les phénomènes de réfraction sont limités. De plus, les récepteurs basse fréquence récents consomment très peu en veille.

L'identifiant peut par exemple mesurer la puissance puis transférer la mesure par signal radio au récepteur radio du véhicule, le calculateur central se chargeant alors de mesurer la distance séparant le véhicule de l'identifiant. Alternativement, l'identifiant peut lui-même calculer la distance et ne répondre au signal d'interrogation que si cette distance est inférieure à un seuil prédéterminé (ou bien répondre que la distance calculée ne répond pas à une condition de sécurité).

Toutefois, cette technique de mesure ne prend pas en compte les phénomènes de réflexions et de réfractions inhérents à la propagation du signal basse fréquence. En effet, la puissance mesurée n'est pas celle du signal en trajet direct entre le véhicule et l'identifiant, mais celle d'une multitude de signaux reçus par l'identifiant, chaque signal ayant effectué un trajet différent entre le véhicule de l'identifiant à cause des surfaces réfléchissantes et réfractives environnantes.

US 4 804 961 A divulgue un procédé de mesure de distance de l'art antérieur mesurant la distance entre un ensemble émetteur-récepteur et un transpondeur monté sur différents objets.

**DESCRIPTION GENERALE DE L'INVENTION**

L'objet de l'invention est donc de proposer un procédé de mesure de distance entre un véhicule et un identifiant, prenant en compte les phénomènes de réflexion et de réfraction des éventuels signaux échangés entre ledit véhicule et ledit identifiant.

Pour ce faire, l'invention propose un procédé de mesure d'une distance suivant la revendication 1.

L'invention et ses différentes applications seront mieux comprises à la lecture de la description qui suit et à l'examen des figures qui l'accompagnent.

## BREVE DESCRIPTION DES FIGURES

Les figures ne sont présentées qu'à titre indicatif et nullement limitatif de l'invention. Les figures montrent :

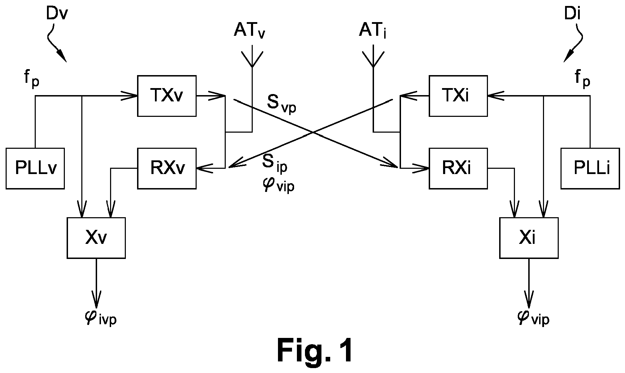

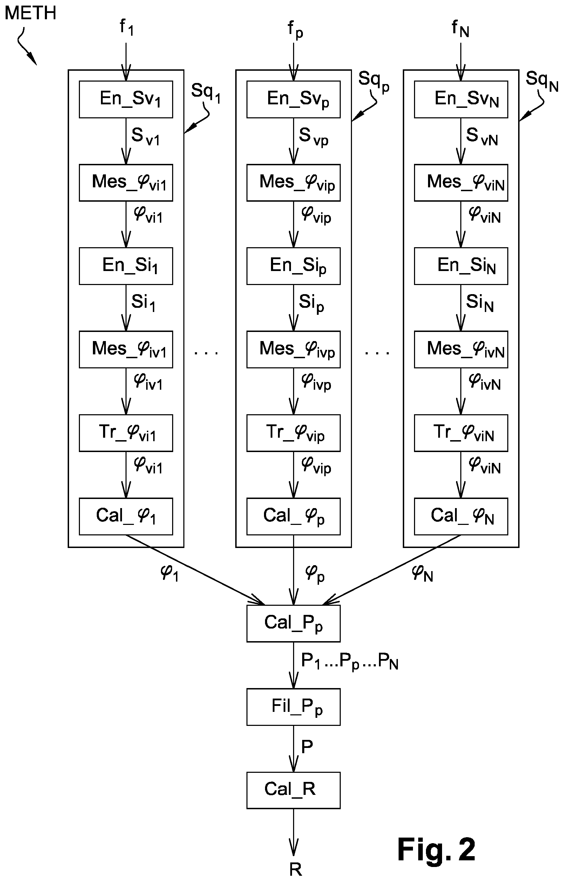

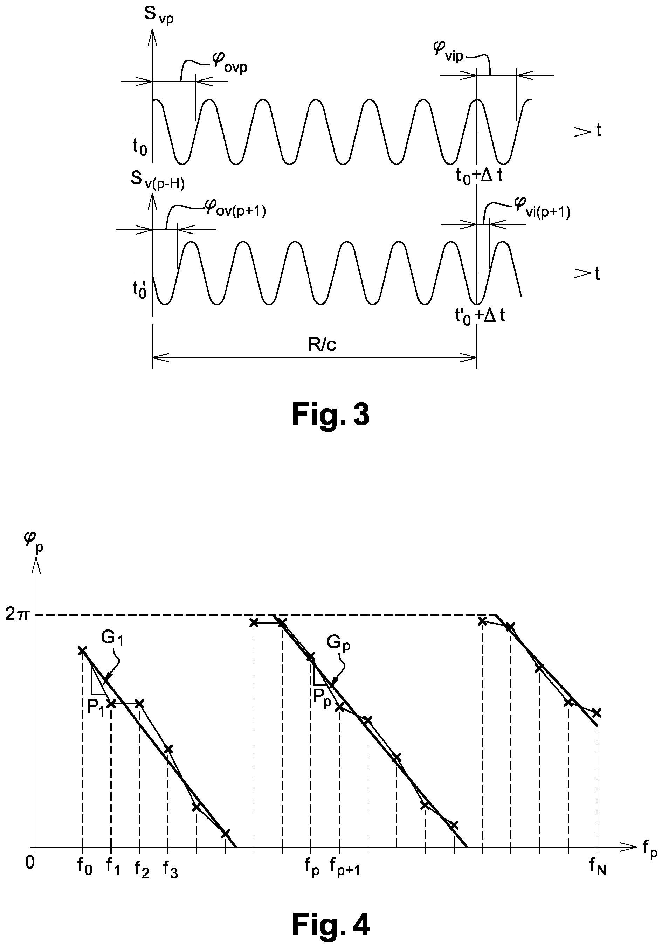

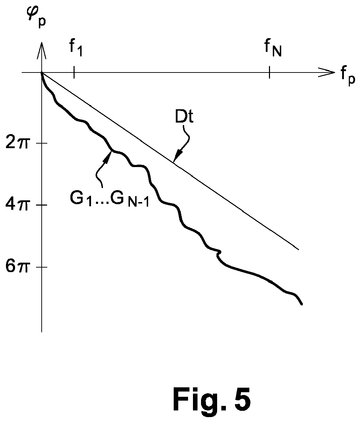

- A la figure 1, deux dispositifs d'émission-réception appartenant respectivement à un véhicule et un identifiant dont on souhaite connaître la distance, les dispositifs étant adaptés à la mise en œuvre d'un procédé selon un mode de réalisation de l'invention ;
- A la figure 2, un diagramme en bloc représentant des étapes du procédé ;
- A la figure 3, des signaux échangés entre les dispositifs d'émission-réception lors d'une étape du procédé ;
- A la figure 4, un graphique représentant des tronçons de phases moyennes, modulo $2\pi$, calculées lors d'étapes du procédé, en fonction de fréquences de signaux échangés lors d'autres étapes du procédé ;
- A la figure 5, un graphique représentant les tronçons de la figure 4, mis bout à bout.

## DESCRIPTION DETAILLEE D'AU MOINS UN MODE DE REALISATION DE L'INVENTION

Sauf précision contraire, un même élément apparaissant sur des figures différentes présente une référence unique.

Le procédé décrit ci-après permet de calculer une distance R entre un véhicule V et un identifiant I dits mains libres, ledit identifiant I permettant de commander selon un principe « mains libres » l'accès ou le démarrage du véhicule V. L'identifiant I est par exemple une carte ou une clef électronique, ou un smartphone disposant d'une application adaptée.

Le véhicule V comporte un premier dispositif d'émission-réception Dv, et l'identifiant I comporte un deuxième dispositif d'émission-réception Di. Le premier dispositif d'émission-réception Dv et le deuxième dispositif d'émission-réception Di étant similaires, une description générale est présentée ci-après ci-après.

En référence à la figure 1, un dispositif d'émission-réception Dz, l'indice z étant indifféremment v ou i, comporte :

- un émetteur TXz de signaux radio (de fréquence au moins égale à 1GHz)
- un récepteur RXz de signaux radio (de fréquence au moins égale à 1GHz)
- une antenne Atz à laquelle sont connectés l'émetteur TXz et le récepteur RXz
- une boucle à verrouillage de phase PLLz pour fournir des signaux de différentes fréquences à l'émetteur TXz et à un calculateur Xv
- le calculateur Xz pour calculer des phases de signaux reçus par le récepteur RXz relativement à des signaux fournis par la boucle à verrouillage de phase PLLz.

On note qu'un smartphone dispose nativement de tous les composants du dispositif d'émission-réception Di décrit. Dans un mode de réalisation préféré, l'identifiant I est donc un smartphone disposant d'une application adaptée à l'accès et au démarrage mains libres du véhicule. Les divers composants du dispositif d'émission-réception Di sont avantageusement déclenchés et contrôlés par l'application installée sur le smartphone.

Le procédé selon l'invention est mis en œuvre par le premier dispositif d'émission-réception Dv et le deuxième dispositif d'émission-réception Di. On note que le premier dispositif d'émission-réception Dv et le deuxième dispositif d'émission-réception Di ont été préalablement synchronisés entre eux, par exemple via un protocole Bluetooth Low Energy (on note qu'un smartphone dispose nativement d'une puce Bluetooth).

En référence à la figure 2, le procédé METH comporte tout d'abord une succession de N séquences $Sq_p$, $p \in [1;N]$, N étant un entier naturel au moins supérieur à 3, chaque séquence $Sq_p$ comprenant les étapes suivantes :

Selon une première étape $Em\_S_{vp}$ d'une séquence $Sq_p$, à un temps $t_{0p}$, un premier signal non modulé $S_{vp}$ de phase $\varphi_{0vp}$ et de fréquence $f_p$, préalablement généré par la boucle à verrouillage de phase PLLv du véhicule V, est émis par l'émetteur TXv du véhicule V. A titre illustratif, des signaux $S_{vp}$ et $S_{v(p+1)}$, qui correspondent respectivement à des séquences $Sq_p$ et $Sq_{p+1}$, sont montrés à la figure 3. Le premier signal $S_{vp}$ est reçu par le récepteur RXi de l'identifiant I à un temps $t_{0p}+\Delta t=t_{0p}+R/c$, où c est la vitesse de propagation du signal et R est la distance séparant le véhicule V de l'identifiant I.

Selon une deuxième étape $Mes\_\varphi_{vip}$ d'une séquence $Sq_p$, le calculateur Xi de l'identifiant I mesure la phase $\varphi_{vip}$, modulo $2\pi$, du premier signal $S_{vp}$ reçu, relativement à un deuxième signal $S_{ip}$. Le deuxième signal $S_{ip}$ est un signal généré par la boucle à verrouillage de phase PLLi de l'identifiant I, tel que sa phase vaut $\varphi_{0ip}$ et sa fréquence $f_p$.

La phase $\varphi_{vip}$ mesurée peut être calculée selon la formule suivante :

$$\varphi_{vip} + k*2\pi = \varphi_{0vp} + 2\pi f_p t_{0p} - \varphi_{0ip} - 2\pi f_p(t_{0p}+R/c)$$

k étant un entier naturel positif.

Selon une troisième étape Em_$S_{ip}$ d'une séquence $Sq_p$, à un temps $t_{1p}$, le deuxième signal $S_{ip}$ est émis par l'émetteur TXi de l'identifiant I. Le deuxième signal $S_{ip}$ est reçu par le récepteur RXv du véhicule V à un temps $t_{1p}+\Delta t=t_{1p}+R/c$.

Selon une quatrième étape Mes_$\varphi_{ivp}$ d'une séquence $Sq_p$, le calculateur Xv du véhicule V mesure la phase $\varphi_{ivp}$, modulo $2\pi$, du deuxième signal $S_{ip}$ reçu, relativement au premier signal $S_{vp}$.

La phase $\varphi_{ivp}$ mesurée peut être calculée selon la formule suivante :

$$\varphi_{ivp} + m*2\pi = \varphi_{0ip} + 2\pi f_p t_{1p} - \varphi_{0vp} - 2\pi f_p(t_{1p}+R/c)$$

m étant un entier naturel positif.

Selon une cinquième étape Tr_$\varphi_{vip}$ d'une séquence $Sq_p$, l'émetteur TXi de l'identifiant I transmet au récepteur RXv du véhicule V la phase $\varphi_{vip}$ qu'il a précédemment mesurée.

Selon une sixième étape Cal_$\varphi_p$ d'une séquence $Sq_p$, un calculateur du véhicule V calcule la moyenne $\varphi_p$ de la phase $\varphi_{ivp}$ (mesurée dans la quatrième étape Mes_$\varphi_{ivp}$) et de la phase $\varphi_{vip}$ (reçue dans la cinquième étape Tr_$\varphi_{vip}$).

La phase moyenne $\varphi_p$ est calculée selon la formule suivante :

$$\varphi_p = (\varphi_{0vp} + 2\pi f_p t_{0p} - \varphi_{0ip} - 2\pi f_p t_{0p} - 2\pi f_p R/c + \varphi_{0ip} + 2\pi f_p t_{1p} - \varphi_{0vp} - 2\pi f_p t_{1p} -$$
$$2\pi f_p R/c - k*2\pi - m*2\pi)/2$$
$$= -\{4\pi f_p R/c + (k+m)*2\pi\}/2$$

On note que chaque séquence $Sq_p$, $p\in[1;N]$, est associée à une fréquence $f_p$. Dans un mode de réalisation préféré, les N séquences $Sq_p$ sont telles que pour tout p entre 1 et N-1, $f_{p+1}-f_p$ est positif et constant. Le procédé METH comporte par exemple 80 séquences $Sq_p$, telles que $f_1=2,4$ GHz, $f_{80}=2,480$ GHz et pour tout p entre 1 et 79, $f_{p+1}-f_p = $ 1MHz. Ces fréquences correspondent en effet à la bande Bluetooth Low Energy.

Les séquences $Sq_p$ pourraient, alternativement, ne pas comprendre la cinquième étape, mais comprendre une étape, entre la quatrième et la sixième étape, de transmission de l'émetteur TXv du véhicule V au récepteur RXi de l'identifiant I, des phases $\varphi_{ivp}$ précédemment mesurées. Ainsi, la sixième étape serait mise en œuvre par le calculateur de l'identifiant I, et non pas par le calculateur du véhicule V.

En référence à la figure 2, le procédé METH comporte également les étapes suivantes, réalisées suite à la mise en œuvre des N séquences $Sq_p$.

Dans une étape Cal_$P_p$, pour chaque p entre 1 et N-1, une pente $P_p$ est calculée par le calculateur Xv du véhicule V par la formule suivante :

$$P_p = (\varphi_{p+1}-\varphi_p)/(f_{p+1}-f_p).$$

On note que :

$$P = [-\{4\pi f_{p+1}R/c + (k+m)*2\pi\}/2 + \{4\pi f_p R/c + (k+m)*2\pi\}/2]/(f_{p+1}-f_p) = -2\pi R/c.$$

Comme le montre la figure 4 qui représente les différentes phases moyennes $\varphi_p$ modulo $2\pi$ (calculées lors des sixièmes étapes Cal_$\varphi_p$ des séquences $Sq_p$) en fonction des différentes fréquences $f_p$, les pentes $P_p$ correspondent à l'inclinaison des segments $G_p$ dont les extrémités sont les points de coordonnées $(f_p ; (\varphi_p)$ et $(f_{p+1} ; \varphi_{p+1})$.

La figure 5 montre les segments $G_1, ... G_{N-1}$ de la figure 4 mis bout à bout, ainsi qu'une droite théorique Dt. La droite théorique Dt correspond à un cas idéal dans lequel les premiers signaux $S_{vp}$ et deuxièmes signaux $S_{ip}$ transmis entre le véhicule V et l'identifiant I ne subissent pas de réflexion ou de réfraction : seuls des signaux en trajets directs sont reçus par les récepteurs Rxv, RXi du véhicule V et de l'identifiant I. Dans un cas réel, les signaux reçus par les récepteurs Rxv, RXi du véhicule V et de l'identifiant I ne sont pas exactement les premiers signaux $S_{vp}$ et deuxièmes signaux $S_{ip}$, mais des accumulations des signaux directs et des signaux réfléchis/réfractés.

Se baser sur une seule pente $P_p$ pour calculer la distance R via la formule précédente présente donc un risque d'erreur non négligeable. Ainsi, dans une étape Fil_$P_p$, les N-1 valeurs de pentes $P_p$ calculées subissent un filtrage, pour déterminer une pente optimale P permettant de réaliser le calcul de la distance R. Le filtrage peut par exemple consister en une sélection de la pente minimale parmi les N-1 pentes $P_p$. Le filtrage peut alternativement consister en une sélection de plusieurs pentes parmi les N-1 pentes $P_p$, puis un moyennage des pentes sélectionnées. Le filtrage peut alternativement consister en un moyennage des N-1 pentes $P_p$. D'autres types de filtrage sont bien sûr envisageables.

Puis, dans une étape Cal_R, la distance R séparant le véhicule V et l'identifiant I est calculée par le calculateur Xv du véhicule V, selon la formule suivante :

$$R = -c/2\pi * P.$$

A partir de la distance R calculée et en fonction d'une fonction spécifique demandée (ouverture d'une porte, fermeture d'une porte, démarrage du véhicule, par exemple), le calculateur Xv du véhicule V est en mesure de déterminer si la fonction doit être réalisée ou non.

Naturellement, les étapes du procédé pourraient, alternativement, être réalisées dans un autre ordre, techniquement possible, que celui présenté ci-avant.

## Revendications

1. Procédé (METH) de mesure d'une distance R séparant un véhicule (V) et un identifiant (I) pour accéder et démarrer le véhicule (V), le véhicule (V) et l'identifiant (I) étant synchronisés, le procédé (METH) comprenant N séquences $Sq_p$, $p \in [1;N]$, N étant un entier naturel au moins supérieur à 3, chaque séquence $Sq_p$ comprenant les étapes suivantes :

   - une transmission (Em_$S_{vp}$), d'un émetteur (TXv) du véhicule (V) à un récepteur (Rxi) de l'identifiant (I), d'un premier signal ($S_{vp}$) de fréquence $f_p$,
   - une mesure (Mes_$\varphi_{vip}$), par un calculateur (Xi) de l'identifiant (I), d'une phase $\varphi_{vip}$, modulo $2\pi$, du premier signal ($S_{vp}$) reçu, relativement à un deuxième signal ($S_{ip}$) de phase $\varphi_{ip}(t) = \varphi0_{ip} + 2\pi f_p t$
   - une transmission (Em_$S_{ip}$), d'un émetteur (TXi) de l'identifiant (I) à un récepteur (RXv) du véhicule (V), du deuxième signal ($S_{ip}$), ledit deuxième signal ($S_{ip}$) étant généré par une boucle à verrouillage de phase (PLLi) de l'identifiant I, tel que sa phase vaut $\varphi_{0ip}$ et sa fréquence $f_p$;
   - une transmission au récepteur (RXv) du véhicule V de la phase $\varphi_{vip}$ qu'il a précédemment mesurée
   - un calcul (Mes_$\varphi_{vip}$), par un calculateur (Xv) du véhicule (V), d'une phase $\varphi_{vip}$, modulo $2\pi$, du deuxième signal ($S_{ip}$) reçu, relativement au premier signal ($S_{vp}$)
   - un calcul (Cal_$\varphi_p$) de la moyenne $\varphi_p$ de la phase $\varphi_{vip}$ et de la phase $\varphi_{vip}$

   le procédé (METH) comportant en outre :

   - pour chaque p entre 1 et N-1, un calcul (Cal_$P_p$) d'une pente $P_p$ par la formule

   $$P_p = (\varphi_{p+1} - \varphi_p)/(f_{p+1} - f_p)$$

   - un filtrage (Fil_$P_p$) des N-1 valeurs de pentes $P_p$ calculées, pour déterminer une pente optimale P
   - un calcul (Cal_R) de la distance R à partir de la pente optimale P.

2. Procédé (METH) selon la revendication précédente, **caractérisé en ce que** la distance R est calculée lors de l'étape de calcul (Cal_R) par la formule suivante :

$$R = -c/(2\pi) * P$$

où c est la vitesse est de propagation du premier signal ($S_{vp}$) et du deuxième signal ($S_{ip}$).

**3.** Procédé (METH) selon l'une des revendications précédentes, **caractérisé en ce que** les N séquences Sq$_p$, p∈[1;N] sont telles que pour tout p entre 1 et N-1, f$_{p+1}$-f$_p$ est constant.

**4.** Procédé (METH) selon l'une des revendications précédentes, **caractérisé en ce que** le filtrage (Fil_P$_p$) comprend une sélection d'une pluralité de pentes parmi les N pentes P$_p$ calculées lors des étapes de calcul (Cal_P$_p$).

**5.** Procédé (METH) selon la revendication précédente, **caractérisé en ce que** le filtrage (Fil_Pp) comprend un moyennage de la pluralité de pentes sélectionnées.

## Patentansprüche

**1.** Verfahren (METH) zur Messung eines Abstands R, der ein Fahrzeug (V) und einen Identifikator (I) trennt, um Zugang zu dem Fahrzeug (V) zu erhalten und es anzulassen, wobei das Fahrzeug (V) und der Identifikator (I) synchronisiert sind, wobei das Verfahren (METH) N Sequenzen Sq$_p$, p∈[1;N] umfasst, wobei N eine natürliche Zahl wenigstens größer als 3 ist, wobei jede Sequenz Sq$_p$ die folgenden Schritte umfasst:

- ein Übertragen (Em_S$_{vp}$) eines ersten Signals (S$_{vp}$) einer Frequenz f$_p$ von einem Sender (TXv) des Fahrzeugs (V) an einen Empfänger (Rxi) des Identifikators (I),
- ein Messen (Mes_$\varphi_{vip}$), durch einen Rechner (Xi) des Identifikators (I), einer Phase $\varphi_{vip}$, modulo $2\pi$, des empfangenen ersten Signals (S$_{vp}$) bezogen auf ein zweites Signal (S$_{ip}$) einer Phase $\varphi_{ip}(t) = \varphi_{0ip} + 2\pi f_p t$
- ein Übertragen (Em_Sip) des zweiten Signals (S$_{iP}$) von einem Sender (TXi) des Identifikators (I) an einen Empfänger (RXv) des Fahrzeugs (V), wobei das zweite Signal (S$_{iP}$) von einer Phasenregelschleife (PLLi) des Identifikators I erzeugt wird, so dass dessen Phase $\varphi_{0ip}$ und dessen Frequenz f$_p$ wert ist;
- ein Übertragen, an den Empfänger (RXv) des Fahrzeugs V, der Phase $\varphi_{vip}$, die er zuvor gemessen hat;
- ein Berechnen (Mes_$\varphi_{ivp}$) einer Phase $\varphi_{ivp}$, modulo $2\pi$, des empfangenen zweiten Signals (S$_{ip}$) bezogen auf das erste Signal (S$_{vp}$) durch einen Rechner (Xv) des Fahrzeugs (V)
- ein Berechnen (Cal_$\varphi_p$) des Durchschnitts $\varphi_p$ der Phase $\varphi_{vip}$ und der Phase $\varphi_{ivp}$

wobei das Verfahren (METH) ferner Folgendes aufweist:

- für jedes p zwischen 1 und N-1 ein Berechnen (Cal_P$_p$) einer Steigung P$_p$ mittels der Formel $P_p = (\varphi_{p+1} - \varphi_p)/(f_{p+1} - f_p)$
- ein Filtern (Fil_P$_p$) der N-1 berechneten Werte der Steigungen P$_p$, um eine optimale Steigung P zu bestimmen
- ein Berechnen (Cal_R) des Abstands R anhand der optimalen Steigung P.

**2.** Verfahren (METH) nach dem vorhergehenden Anspruch, **dadurch gekennzeichnet, dass** der Abstand R beim Schritt des Berechnens (Cal_R) mittels der folgenden Formel berechnet wird:

$$R = -c/(2\pi)*P$$

wobei c die Geschwindigkeit ist der Ausbreitung der ersten Signals (S$_{vp}$) und des zweiten Signals (S$_{ip}$) ist.

**3.** Verfahren (METH) nach einem der vorhergehenden Ansprüche, **dadurch gekennzeichnet, dass** die N Sequenzen Sq$_p$, p∈ [1;N] so geartet sind, dass für jedes p zwischen 1 und N-1, f$_{p+1}$-f$_p$ konstant ist.

**4.** Verfahren (METH) nach einem der vorhergehenden Ansprüche, **dadurch gekennzeichnet, dass** das Filtern (Fil_P$_p$) ein Auswählen einer Mehrzahl von Steigungen aus den N Steigungen P$_p$ umfasst, die bei den Schritten des Berechnens (Cal_P$_p$) berechnet werden.

**5.** Verfahren (METH) nach dem vorhergehenden Anspruch, **dadurch gekennzeichnet, dass** das Filtern (Fil_P$_p$) ein Mitteln der ausgewählten Mehrzahl von Steigungen umfasst.

## Claims

**1.** Method (METH) for measuring a distance R separating a vehicle (V) and an identifier (I) for accessing and starting the vehicle (V), the vehicle (V) and the identifier (I) being synchronized, the method (METH) comprising N sequences $Sq_p$, $p \in [1;N]$, N being a natural number at least greater than 3, each sequence $Sq_p$ comprising the following steps:

- transmission (Em_$S_{vp}$), from a transmitter (TXv) of the vehicle (V) to a receiver (Rxi) of the identifier (I), of a first signal ($S_{vp}$) of frequency $f_p$
- measurement (Mes_$\phi_{vip}$), by a computer (Xi) of the identifier (I), of a phase $\phi_{vip}$, modulo 2n, of the received first signal ($S_{vp}$), in relation to a second signal ($S_{ip}$) of phase $\phi_{ip}(t) = \phi_{0ip} + 2\pi f_p t$
- transmission (Em_$S_{ip}$), from a transmitter (TXi) of the identifier (I) to a receiver (RXv) of the vehicle (V), of the second signal ($S_{ip}$), said second signal ($S_{ip}$) being generated by a phase-locked loop (PLLi) of the identifier I, such that its phase has a value $\phi_{0ip}$ and its frequency has a value $f_p$;
- transmission, to the receiver (RXv) of the vehicle V, of the phase $\phi_{vip}$ that it measured beforehand;
- calculation (Mes_$\phi_{ivp}$), by a computer (Xv) of the vehicle (V), of a phase $\phi_{ivp}$, modulo 2n, of the received second signal ($S_{ip}$), in relation to the first signal ($S_{vp}$)
- calculation (Cal_$\phi_p$) of the average $\phi_p$ of the phase $\phi_{vip}$ and of the phase $\phi_{ivp}$

the method (METH) furthermore including:

- for each value of p between 1 and N-1, calculation (Cal_$P_p$) of a gradient $P_p$ using the formula $P_p = (\phi_{p+1} - \phi_p)/(f_{p+1} - f_p)$
- filtering (Fil_$P_p$) of the N-1 values of calculated gradients $P_p$ so as to determine an optimum gradient P
- calculation (Cal_R) of the distance R on the basis of the optimum gradient P.

**2.** Method (METH) according to the preceding claim, **characterized in that** the distance R is calculated, during the calculation step (Cal_R), using the following formula:

$$R = -c/(2\pi) * P$$

where c is the speed of propagation of the first signal ($S_{vp}$) and of the second signal ($S_{ip}$).

**3.** Method (METH) according to either of the preceding claims, **characterized in that** the N sequences $Sq_p$, $p \in [1;N]$ are such that, for all values of p between 1 and N-1, $f_{p+1} - f_p$ is constant.

**4.** Method (METH) according to one of the preceding claims, **characterized in that** the filtering (Fil_$P_p$) comprises selecting a plurality of gradients from among the N gradients $P_p$ calculated during the calculation steps (Cal_$P_p$).

**5.** Method (METH) according to the preceding claim, **characterized in that** the filtering (Fil_$P_p$) comprises averaging the plurality of selected gradients.

Dv

$f_p$      AT$_v$      AT$_i$      Di

$f_p$

| | TXv | $S_{vp}$ | | TXi | |

PLLv    RXv    $S_{ip}$   $\varphi_{vip}$    RXi    PLLi

Xv

$\varphi_{ivp}$

Xi

$\varphi_{vip}$

# Fig. 1

**Fig. 2**

**Fig. 3**

**Fig. 4**

**Fig. 5**

**EP 3 345 015 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4804961 A